Europäisches Patentamt

European Patent Office

Office européen des brevets

(19)

(11) Publication number: **0 091 801**

A2

# EUROPEAN PATENT APPLICATION

(21) Application number: 83301986.2

(22) Date of filing: 08.04.83

(51) Int. Cl.³: **F 15 B 7/00**
**B 25 J 11/00**

(30) Priority: 14.04.82 US 368219

(43) Date of publication of application:
19.10.83 Bulletin 83/42

(84) Designated Contracting States:
DE FR GB IT SE

(71) Applicant: UNIMATION INC.
Shelter Rock Lane
Danbury Connecticut 06810(US)

(72) Inventor: Lindbom, Torsten H.
Route 133
Brookfield Connecticut 06804(US)

(74) Representative: Orr, William McLean et al,
Haseltine Lake & Co Hazlitt House 28 Southampton
Buildings Chancery Lane
London WC2A 1AT(GB)

(54) Energy recovery system for manipulator apparatus.

(57) An energy recovery system (100) for manipulator apparatus is provided that supplies energy to drive the manipulator apparatus from a pressurized source (at 12) and that recovers energy from the manipulator apparatus during the deceleration phase of the manipulator arm in one or more of the controlled axes. The energy recovery system (100) includes a variable displacement pump/motor (10, 26) that is driven by a motor/generator unit (34). The hydraulic pump/motor unit includes a pressure responsive control arrangement (40) for selectively controlling the hydraulic pump/motor between a motor mode and a pump mode. The pump/motor in the pump mode is driven by the motor/generator unit to supply a source of pressurized fluid to the servo valves that control movement of the manipulator arms through hydraulic actuators. When the manipulator arm is decelerating, the servo valves for the axes are closed and the decelerating hydraulic actuators provide a source of pressurized fluid at a pressure above the normal pressurized supply from the pump. The pressure responsive control arrangement of the pump/motor senses the high pressure condition and switches the pump/motor to the hydraulic motor mode. In the hydraulic motor mode, the pump/motor in response to a source of pressurized fluid from the hydraulic actuators operates the motor/generator in the generator mode to supply electrical energy. The motor/generator unit in one arrangement includes a high mass flywheel to supply energy storage for the manipulator apparatus.

EP 0 091 801 A2

./...

Croydon Printing Company Ltd.

-1-

## ENERGY RECOVERY SYSTEM FOR MANIPULATOR APPARATUS

The present invention relates generally to the field of manipulator apparatus and more particularly to an energy recovery system including a hydraulic pump/motor that operates in a pump mode to accelerate the manipulator arm and that operates in a motor mode for energy recovery when the manipulator arm is decelerating.

Various arrangements have been proposed by the prior art for generating power. For example, windmill generators and hydroelectric wave apparatus have been proposed and implemented to harness natural forces to produce electricity. Further vehicle systems have been proposed utilizing motor-generator action and flywheel arrangements to convert vehicle motion into either electricity or to store momentum or power.

While these arrangements of the prior art are generally suitable for their intended use, it would be desirable to provide an energy recovery system for industrial manipulator apparatus that recovers a portion of the energy expended in operating the manipulator apparatus with the energy recovery being provided by portions of the normal operating work cycle of the manipulator apparatus.

According to one aspsect of the present invention there is provided an energy recovery system for hydraulically operated apparatus, the hydraulically operated apparatus having one or more hydraulically operated actuators and hydraulic control arrangements connected to the hydraulically operated actuators, the hydraulic control arrangements having hydraulic fluid connections for receiving pressurized fluid for accelerating the actuators and for supplying pressurized fluid during deceleration of the actuators, the energy recovery system characterized by: hydraulic pump/motor means fluid connection with the hydraulic control arrangements being selectively operable in a pump mode for supplying pressurized fluid to the hydraulic control arrangements and being selectively operable in a motor mode for receiving pressurized fluid from the servo control circuitry, said hydraulic pump/motor means including mode actuator means for conditioning said pump/motor means between said pump and motor modes; means for driving said hydraulic pump/motor means comprising a main drive source and drive train means for coupling said main drive source to said pump/motor means; control means responsive to the pressure of the fluid connection between said pump/motor means and the hydraulic control arrangements for operating said mode actuator means, said control means operating said mode actuator means to operate said pump/motor means in said pump mode when the pressure at the fluid connection is below a predetermined value and operating said mode actuator to operate said pump/motor means in said motor mode when the pressure at the fluid connection is above a predetermined value; and means responsive to said pump/motor means for recovering energy when said pump/motor means is operating in said motor mode.

According to another aspect of the present invention there is provided an energy recovery system for manipulator apparatus wherein a hydraulic pump/motor is driven by a motor/generator to provide a source of pressurized fluid to drive the hydraulic actuators of manipulator apparatus in a plurality of axes to accelerate and move the manipulator arm and the pump/motor operating as a hydraulic motor to operate the motor/generator as a generator when the manipulator arm decelerates.

According to yet another aspect of the present invention there is provided a variable displacement hydraulic pump/motor with a pressure responsive mode control arrangement that selectively operates as a pump when the hydraulic load on the pump demands a pressurized source and that operates as a hydraulic motor when the hydraulic load delivers pressurized fluid to the pump/motor.

One preferred embodiment provides an energy recovery system for manipulator apparatus that supplies energy to drive the manipulator apparatus from a pressurized source and that recovers energy from the manipulator apparatus during the deceleration phase of the manipulator arm in one or more of the controlled axes. The energy recovery system includes a variable displacement pump/motor that is driven by a motor/generator unit. The hydraulic pump/motor unit includes a pressure responsive control arrangement for selectively controlling the hydraulic pump/motor between a motor mode and a pump mode. With the pump/motor in the pump mode, the pump is driven by the motor/generator unit to supply a source of pressurized fluid to the servo valves that control movement of the manipulator arms through hydraulic actuators. When the manipulator arm is decelerating, for example as the arm is moved from a first point to a second point and is decelerated to stop at the second point to perform a work operation, the servo valves for the axes are closed and the decelerating hydraulic actuators provide a source of pressurized fluid at a pressure above the normal pressurized supply from the pump. The pressure responsive control arrangement of the pump/motor senses the high pressure condition and switches the pump/motor to the hydraulic motor mode. In the hydraulic motor mode, the pump/motor in response to a source of pressurized fluid from the hydraulic actuators operates the motor/generator in the generator mode to supply electrical energy back into the source power grid or to supply other adjacent equipment or storage devices. The motor/generator unit in one arrangement includes a high mass flywheel to supply energy storage for the manipulator apparatus when the pump/motor operates in the motor mode for later demand by the manipulator apparatus when the pump/motor is operating in the pump mode.

For a better understanding of the invention and to show how to put it into effect, reference will now be made by way of example to the accompanying drawing which is a schematic and diagrammatic representation of the energy recovery system of the present invention as shown in conjunction with the operation of hydraulically actuated manipulator apparatus.

Referring now to the single drawing figure, the energy recovery system 10 of the present invention is arranged for fluid communication with a hydraulically operated system generally referred to at 20 by means of a pressurized supply line 12 and a fluid return line 14.

The hydraulically operated system 20 in one specific application is a programmable manipulator of the type generally shown for example in U.S. Patents Nos. 3,661,051, 4,163,183, and 4,201,937 to which reference may be made for a more complete discussion of the programmable manipulator.

The manipulator 20 includes a servo system referred generally at 16 including servo control valves for controlling hydraulic actuators in one or more of the controllable axes of the manipulator arm of the manipulator apparatus. The servo valves of the servo system 16 are selectively operated to accelerate the manipulator arm in one or more of the controlled axes to move the manipulator arm from one position to another in accordance with a stored program. Further, the servo valves are also controllable to move the arm at a predetermined slewing speed after the arm has been accelerated to the slewing speed. The servo valves of the servo system 16 are controlled to decelerate the hydraulic actuators of the manipulator arm when it is desired to stop the manipulator arm to perform a desired work operation.

The servo system 16 is connected to the pressurized supply line 12 and also to a reservoir 18 by means of a return line 20. Commonly, a hydraulic accumulator 24 is provided for the manipulator although the accumulator is optional in accordance to the practice of the present invention with the energy recovery system 10.

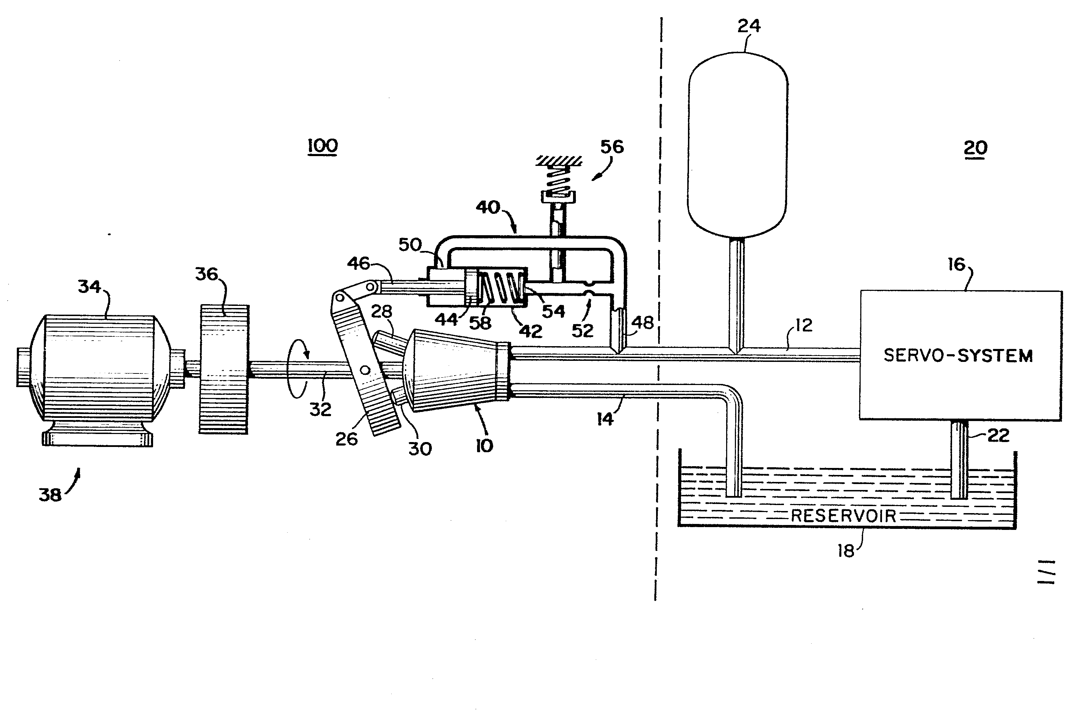

, In accordance with the preferred practice of the present invention, the programmable manipulator 20 includes the control arrangements of U.S. application Serial No. 369,278 filed by T.H. Lindbom on April 19, 1982 and corresponding to European application Serial No. _____. Basically the control arrangement in the aforementioned application Serial No. 369,278 utilizes a selectively controlled bypass valving arrangement and a servo valve for control of one or more of the hydraulic actuators of the manipulator arm. The servo valve is utilized to accelerate the manipulator arm to slewing speed. When the manipulator arm reaches slewing speed, the bypass valving arrangement is opened and the servo valve is closed during the desired slewing period of the arm. Thereafter, the bypass valving arrangement is closed for deceleration of the manipulator arm. To maintain an appropriate deceleration schedule, the bypass valving arrangement is selectively controlled between the opened and closed positions for interconnecting the opposite ends of a respective actuator. Thus, during the decleration of the manipulator arm, hydraulic fluid at a pressure above the normal operating supply pressure is supplied for example at the pressurized supply line 12 which corresponds to the supply lines 22 and 44 in FIG. 1 of U.S. application Serial No. 369,278 to which reference may be made for a more complete discussion of the operation of the bypass valving arrangement.

Referring to FIG. 1 of U.S. application Serial No. 369,278, high pressure check valves 90 and 92 are provided between the pressurized supply line 22 and the respective ends of the hydraulic actuator; high pressure check valves 90, 92 being arranged to open when the pressure at either end of the hydraulic actuator exceeds the normal operating system pressure. Further, low pressure check valves 94, 96 are provided between the respective ends of the cylinder and the return line 24 such that the respective low pressure check valve opens when the pressure in the return line 24 is greater than the pressure at the respective end of the cylinder. For the practice of the energy recovery system 10 of the present invention with programmable manipulator apparatus wherein the bypass valving arrangement of the aforementioned U.S. application Serial Number 369,278 is not utilized such that the control of the hydraulic actuator is entirely controlled by the servo valve, the check valves 90, 92, 94, 96 in FIG. 1 of that application are provided.

Accordingly, during various phases of the work cycle of the hydraulically operated system or manipulator 20, a source of pressurized fluid is demanded from supply line 12 during the acceleration phases of the actuators and pressurized fluid is supplied at the supply line 12 from the servo system 16 at a pressure above normal operating system pressure when the actuators are decelerated.

The energy recovery system 10 includes a variable displacement pump/motor unit 10. The pump/motor unit 10 is selectively operated as either a hydraulic pump or a hydraulic motor in accordance with the positioning of a pivotally mounted swash plate controller 26 and mode actuators 28, 30. With the swash plate controller 26 pivotted to the position shown in the drawing figure so as to operatively engage and actuate the pump mode actuator 30, the pump/motor 10 operates as a hydraulic pump. Further, when the swash plate controller 26 is positioned to operatively engage and actuate the motor mode actuator 28, the pump/motor 10 operates as a hydraulic motor.

The pump/motor 10 is driven by a rotatable shaft 32 that is connected to the drive output of a motor/generator unit 34. In a specific embodiment, a flywheel 36 is also carried by the shaft 32. The motor/generator unit 34 is connected to an electrical supply source at 38 such as a commercial power grid.

With the pump/motor unit 10 operating as a hydraulic pump in accordance with the position in the drawing, the motor/generator unit 34 rotates the pump mechanism within the pump/unit 10 via the drive shaft 32. Thus, hydraulic fluid is drawn from the fluid reservoir 18 by means of the line 14 and pressurized fluid is delivered from the pump 10 to the hydraulic accumulator 24 and the pressurized supply line 12 to the servo system 16.

The energy recovery system 10 of the present invention includes a pressure responsive control arrangement 40. The pressure responsive control arrangement 40 includes a cylinder 42 having disposed therein a piston 44 with an extending actuator 46. The extending actuator 46 is pivotally coupled to control the position of the swash plate controller 26. Thus when the piston 44 is moved to the left position as shown in the drawing, the swash plate controller 26 is shifted to actuate the pump mode actuator 30 to enable operation of the pump/motor 10 as a hydraulic pump. Further with the actuator rod 46 positioned to the right of the position in the drawing, the swashplate controller 26 is pivotted in a clockwise direction to disengage the actuator 30 and to operatively engage the motor mode actuator 28 to enable operation of the pump/motor unit as a hydraulic motor.

The pressure responsive control arrangement 40 includes a fluid line 48 in communication with the pressurized supply line 12. The fluid connection 48 is connected to the left chamber of the cylinder 42 at an inlet 50. Further, the fluid connection 48 is connected through a restrictor section 52 to the right chamber of the cylinder 42 at an inlet 54. The right side chamber inlet 54 is also connected to a relief valve generally indicated at 56 that is arranged to open at the normal operating system pressure, 1000 p.s.i. for example. A spring 58 is disposed within the right side of the cylinder 42 between the piston 44 and the cylinder wall to provide a predetermined biasing force to bias the piston 44 to the left in the drawing. In a specific embodiment, the biasing force of the spring 58 is approximately equal to 100 p.s.i. of pressure differential between the left and right chambers of the cylinder 42. When the piston 44 is in the position shown in the drawing for the pump mode of operation, the piston 44 is shifted somewhat to the left of the center of the cylinder 42.

During operation of the hydraulic system 20 or manipulator, when the servo valves of the servo system 16 are operational to supply pressurized fluid to the hydraulic actuators, the pump/motor 10 is in the pump mode as shown in the drawing and operates as a hydraulic pump and to supply pressurized fluid at 12. When no demand is made by the hydraulic system 20 for pressurized fluid flow at 12, the piston 44 moves toward a central idle position in response to the pressure at 12 and line 48 increasing above the normal operation pressure of the pump supplying mode.

When the hydraulic system 20 or manipulator is decelerating the hydraulic actuators, the pressure at supply line 12 increases as explained hereinbefore. For example, during deceleration of the hydraulic actuators of the hydraulic system 20, pressurized fluid is forced back from the hydraulic actuators through the high pressure check valves such that the fluid pressure at the supply line 12 reaches a pressure in the range of 1100 to 1200 p.s.i. In response to the increased pressure, the piston 44 is moved to the right of the position shown in the drawing against the biasing force of the spring 58 due to the differential pressure at inlet 50 with respect to inlet 54. Thus, as the piston 44 moves to the right of center position, the coupled swashplate controller 26 is also pivotted to deactuate the pump mode actuator 30 and to actuate the motor mode actuator 28.

Accordingly, the hydraulic pump/motor unit 10 is conditioned to the hydraulic motor mode and the flow of pressurized fluid above normal system pressure of the servo system 16 flows through the inlet line 12 through the pump/motor unit 10 and through the return line 14 to the reservoir 18. In the hydraulic motor mode, the pump/motor unit 10 converts the flow of hydraulic fluid to rotational energy at shaft 32 to rotate the motor/generator unit 34. Accordingly, the motor/generator unit 34 operates in a generator mode to supply power to the power grid connected at 38. Further, in embodiments where the flywheel 36 is provided, rotational energy is also stored by the flywheel 36 for later use in powering the pump/motor unit 10 in a pump mode when demand is made by the hydraulic system 20 for pressurized fluid.

The displacement of the pump/motor unit 10 and the positioning of the piston 44 are controlled in accordance with the pressure at 12 that is maintained by the pressurized fluid flowing from the hydraulic actuators of the system 20. An equilibrium is established by the piston 44 in accordance with the differential pressures and the spring bias of spring 58.

When the hydraulic actuators of the system 20 are no longer decelerating and the system pressure at 12 drops to normal operation pressure or below, the pump/motor unit 10 in accordance with the positioning of the swashplate controller 26 and the piston 44 switches from motor mode operation toward the central position of no demand and approximately zero flow in line 12. Again when the hydraulic system 20 demands pressurized fluid at 12 for again accelerating the hydraulic actuators, the pump/motor unit 10 in accordance with the positioning of the piston 44 conditions the pump/motor unit to the hydraulic pump mode for supplying pressurized fluid at 12 to the hydraulic actuators of the system 20. For example as the pressure at 12 begins to drop below 1100 p.s.i., the piston 44 is shifted to the left of the center idle position as shown in the drawing and the pump mode actuator 30 is again actuated by the swashplate controller 26 to provide hydraulic pump action.

In a specific embodiment the pump/motor unit 10 is of the general type as disclosed in U.S. patent Nos. 3,855,879 and Re. 27,307 and available from HydroDrive Corporation of New York as units HC-48A and HK-480.

While the unit 34 is referred to as a motor/generator unit, it should be realized that in specific embodiments the unit 34 is a synchronous motor/alternator unit. Thus, as a motor, the unit 34 operates with a range of slip between rotor speed and the speed of magnetic rotation in the field. When the pump/motor unit 10 operates in the motor mode, the unit 34 operates as an alternater in a positive slip region. In a specific embodiment provided with a flywheel 36, the flywheel is arranged to absorb and store recovered energy and the unit 34 continues to operate within the region of slip as a motor.

It is intended in the appended claims to cover all such changes and modifications as fall within the true spirit and scope of the present invention.

1.    An energy recovery system (100) for hydraulically operated apparatus (e.g. 20), the hydraulically operated apparatus having one or more hydraulically operated actuators and hydraulic control arrangements (16) connected to the hydraulically operated actuators, the hydraulic control arrangements having hydraulic fluid connections (e.g. at 12) for receiving pressurized fluid for accelerating the actuators and for supplying pressurized fluid during deceleration of the actuators, the energy recovery system characterized by:

hydraulic pump/motor means (10) fluid connection with the hydraulic control arrangements being selectively operable in a pump mode for supplying pressurized fluid to the hydraulic control arrangements and being selectively operable in a motor mode for receiving pressurized fluid from the servo control circuitry, said hydraulic pump/motor means including mode actuator means (30, 28) for conditioning  said pump/motor means between said pump and motor modes;

means (e.g. 34, 32) for driving said hydraulic pump/motor means comprising a main drive source and drive train means for coupling said main drive source to said pump/motor means;

control means (40, 26) responsive to the pressure of the fluid connection between said pump/motor means and the hydraulic control arrangements for operating said mode actuator means, said control means operating said mode actuator means to operate said pump/motor means in said pump mode when the pressure at the fluid connection is below a predetermined value and operating said mode actuator to operate said pump/motor means in said motor mode when the pressure at the fluid connection is above a predetermined value; and

means (e.g. 34 or 36 or 24) responsive to said pump/motor means for recovering energy when said pump/motor means is operating in said motor mode.

2. The energy recovery system of claim 1 wherein said energy recovering means is a flywheel (36) arranged to be driven by said drive means.

3. The energy recovery system of claim 1 wherein said main drive source is an electric motor/generator and said energy recovery means comprises means including said motor/generator for generating electric power.

4. The energy recovery system of claim 1 wherein said control means is characterized by a cylinder (42), a piston (44) slidably mounted in said cylinder, means (48, 50) for fluidly connecting a first end of said cylinder to said fluid connection between said pump/motor and the hydraulic control arrangements, means (52, 56) for limiting the pressure at the second end of said cylinder below a predetermined value and for providing fluid connection to said second end of said cylinder at a reduced pressure equal to the pressure of said fluid connection to the hydraulic control arrangements reduced by a predetermined pressure offset, and means (38) for providing a predetermined biasing force to offset said piston toward said first end thereof when the pressure at each side of said cylinder is equal, said control means further characterized by means (46, 26) connected to said piston for operating said mode actuator means.

5.    The energy recovery system of claim 4 wherein said mode actuator means comprises manually actuable means (28, 30) responsive to said operating means, said operating means comprising a pivotally mounted control member (26) being pivoted between pump and motor actuating positions.

6.    The energy recovery system of claim 5 wherein said pump/motor means is conditioned to said pump mode when said piston is moved to a predetermined position adjacent said first end of said cylinder and is conditioned to said motor mode when said piston is moved to a predetermined position adjacent said second end of said cylinder.

7.    The energy recovery system of claim 4 wherein said pressure limiting and reduced pressure providing means comprises a relief valve (56) in fluid connection with said second end of said cylinder and a restrictor element (52) connected in line between said second end of said cylinder and said fluid connection to said hydraulic arrangements.

8.    The energy recovery system of claim 1 wherien said pump/motor means comprises a variable displacement pump/motor selectively operable over a range of pump displacement and a range of motor displacement in accordance with the position of said mode actuator means, said mode actuator means comprising actuator member means (28, 30) operable over a predetermined range corresponding to pump and motor displacement ranges.

9.    The energy recovery system of claim 8 wherein said actuator member means comprises a pump mode actuator (30) member and a motor mode actuator member (28), said control means comprising a pivotally mounted control member (26) disposed for engagement of either said pump mode actuator or said motor mode actuator in accordance with the pivoted position of said control member.

10. The energy recovery system of claim 1 further characterized by a reservoir (18) of hydraulic fluid and wherein said pump/motor means is further characterized by the provision of means (at 14) for fluidly connecting said reservoir to said pump/motor means, said pump/motor means in said pump mode drawing hydraulic fluid from said reservoir and supplying pressurized fluid at said fluid connection to the hydraulic control arrangements, said pump/motor means in said motor mode receiving hydraulic fluid from said fluid connection to the hydraulic arrangements and supplying hydraulic fluid to said reservoir.

11. In a programmable manipulator, the combination of:

a manipulator arm movable in a plurality of axes;

manipulator control means (16) for moving said manipulator arm to various positions in accordance with program control signals, said manipulator control means comprising hydraulically operated actuators and hydraulic control (16) means for accelerating said manipulator arm in accordance with said program control signals and in response to a source of pressurized fluid at a pressurized supply input (12) and for decelerating said manipulator arm in accordance with said program control signals and supplying pressurized fluid at said pressurized supply input (12);

hydraulic pump/motor means (10) selectively operable in a pump mode for supplying pressurized fluid at said pressurized supply input and selectively operable in a motor mode for receiving pressurized fluid from said pressurized supply input, said pump/motor means including mode actuator means (28, 30) for conditioning said pump/motor means between said pump and motor modes;

means (34, 32) for driving said pump/motor means; and

control means for (40, 26) responsive to the pressure at said pressurized fluid input for operating said mode actuator means, said control means comprising means (44, 46, 26) operable in response to a pressure in excess of a predetermined pressure for operating said mode actuator means to condition said pump/motor means to said motor mode.

100

20

SERVO-SYSTEM

RESERVOIR

0091801

1/1